(19) Europäisches Patentamt

European Patent Office

Office européen des brevets

(11) Veröffentlichungsnummer: **0 461 300 B1**

## (12) EUROPÄISCHE PATENTSCHRIFT

(45) Veröffentlichungstag der Patentschrift: **28.12.94**

�IntCl.5 (51) Int. Cl.⁵: **G01B 3/20**

(21) Anmeldenummer: **90116452.5**

(22) Anmeldetag: **28.08.90**

(54) Verfahren zum Messen einer Länge und elektronische Schieblehre.

(30) Priorität: **05.06.90 DE 4017954**

(43) Veröffentlichungstag der Anmeldung:
**18.12.91 Patentblatt 91/51**

(45) Bekanntmachung des Hinweises auf die
Patenterteilung:
**28.12.94 Patentblatt 94/52**

(84) Benannte Vertragsstaaten:
**AT BE CH DE DK ES FR GB GR IT LI LU NL SE**

(56) Entgegenhaltungen:
EP-A- 0 318 658     EP-A- 0 369 493
AT-B- 283 765       DE-A- 3 413 855
US-A- 4 226 024     US-A- 4 629 982

(73) Patentinhaber: **PAV Präzisions-Apparatebau
Aktiengesellschaft
Schaaner Strasse 40
FL-9490 Vaduz (LI)**

(72) Erfinder: **Lorenz, Marcel
Oberbühl 98
FL-8487 Gamprin (LI)**

(74) Vertreter: **Witte, Alexander, Dr.-Ing.
Witte, Weller, Gahlert & Otten
Patentanwälte
Rotebühlstrasse 121
D-70178 Stuttgart (DE)**

## Beschreibung

Die Erfindung betrifft ein Verfahren zum Messen einer Länge mittels einer elektronischen Schieblehre mit einem Stab und einem auf dem Stab längsverschiebbar angeordneten Läufer, mit einer auf dem Stab angebrachten Markierung, die in Längsrichtung mit einem Rastermaß periodisch angeordnete Längsmarken umfaßt, mit mindestens zwei an dem Läufer angeordneten und auf die Markierung ansprechenden Sensoren, die in Längsrichtung zueinander um einen Betrag versetzt sind, der ungleich dem n-fachen des halben Rastermaßes ist, wobei n eine ganze Zahl ist, derart, daß beim Verschieben des Läufers auf dem Stab von den Sensoren erzeugte periodische Signale eine Phasenverschiebung zueinander aufweisen, und mit Schaltmitteln zum Addieren bzw. Subtrahieren von aus den Signalen abgeleiteten Impulsen in Abhängigkeit vom Vorzeichen der Phasenverschiebung.

Die Erfindung betrifft ferner eine elektronische Schieblehre der vorstehend genannten Art.

Ein derartiges Verfahren und eine derartige Schieblehre sind aus dem Dokument US-A-4 226 024 bekannt.

Bei der bekannten Schieblehre ist der Stab mit ferromagnetischen Längsmarken versehen, die äquidistant über die Länge des Stabes verteilt sind. Der Läufer ist mit zwei Feldplatten-Sensoren versehen, die in Längsrichtung um einen Betrag $2 n \pi + \pi/2$ versetzt sind, wobei $2\pi$ das Rastermaß der Längsmarken ist. Die beiden Feldplatten-Sensoren erzeugen beim Verschieben des Läufers auf dem Stab in etwa sinusförmige Signale, die gerade eine Phasenverschiebung von $\pi/2$ gegeneinander aufweisen. Je nachdem, in welcher Richtung der Läufer auf dem Stab verschoben wird, ist diese Phasenverschiebung positiv bzw. negativ.

Bei der bekannten Schieblehre werden die von den Feldplatten-Sensoren erzeugten Signale zunächst verstärkt und dann über Schwellwertstufen geleitet, um die sinusförmigen Signale in impulsförmige Signale umzuwandeln. In einer nachgeschalteten Recheneinheit, über die nähere Angaben nicht gemacht werden, findet nun eine Zählung von Impulsen statt, wobei die Zählrichtung von der Phasenlage der Signale der Feldplatten-Sensoren zueinander abhängt.

Bei dem bekannten Verfahren bzw. der bekannten Schieblehre ist von Nachteil, daß eine Verarbeitung der Sensorsignale in zunehmendem Ausmaße fehlerbehaftet wird, wenn den Sensorsignalen Gleichspannungssignale (DC) als Driftsignale oder sonstige Störsignale überlagert werden. Außerdem ist bei dem bekannten Verfahren und der bekannten Schieblehre keine Vorsorge für den Fall getroffen, daß der Läufer auf dem Stab so schnell verschoben wird, daß zusätzliche dynamische Fehler auftreten.

Aus dem Dokument DE-A-34 13 855 sind ein Verfahren zum Auswerten von Meßsignalen, die durch Abtasten eines Inkrementalmaßstabes mit einer Abtasteinheit erhalten werden, sowie eine Meßeinrichtung zur Durchführung dieses Verfahrens bekannt. Nach dem bekannten Verfahren werden mittels der Abtasteinheit von dem Inkrementalmaßstab zwei sinusförmige, gegeneinander phasenverschobene Signale abgenommen. Diese Signale werden digitalisiert, das heißt mit einer vorbestimmten Abtastrate periodisch abgetastet. Aus den digitalisierten Signalen werden ein Maximumwert und ein Minimumwert ermittelt und durch Mittelwertbildung der zugehörige Nullwert ermittelt, um Gleichspannungsschwankungen zu eliminieren. Zur Fehlerbeseitigung wird ferner ein vollständiger Soll-Signalzug abgespeichert und spätere Signale auf diesen normiert. Für diese Operationen wird ein Digitalrechner eingesetzt.

Aus dem Dokument EP-A-0 369 493 ist ein Verfahren zur berührungslosen Positionsmessung bekannt. Auch bei diesem bekannten Verfahren werden Ausgangssignale benachbarter Sensoren einer mehrere Sensoren enthaltenden Sensoranordnung ausgewertet. Auf diese Weise lassen sich Alterungs- oder Driftvorgänge der Sensoren sowie vollständige Ausfälle von einzelnen Sensoren ermitteln.

Aus dem Dokument EP-A-0 318 658 ist ein Verfahren zur Fehlererkennung bei Positionsmeßsystemen bekannt. Bei diesem bekannten Verfahren werden ebenfalls zwei periodische Abtastsignale erzeugt. Eine Fehlererkennungseinrichtung umfaßt zwei Triggerstufen zur Erzeugung eines Fehlererkennungsignals bei fehlerhaften Amplitudenhöhen der beiden Abtastsignale.

Aus dem Dokument US-A-4 629 982 ist eine Vorrichtung zum Erfassen einer Bewegung und einer Richtung bekannt, die magnetoresistive Sensoren umfaßt, die gegeneinander um einen vorbestimmten Abstand versetzt sind, der ein Viertel der Wellenlänge einer Bewegungsgröße des zu messenden Körpers ausmacht. Bei der bekannten Vorrichtung werden Summen- und Differenzsignale gebildet, um die Bewegung, Geschwindigkeit und relative Lage des Körpers zu erfassen.

Der Erfindung liegt daher die Aufgabe Zugrunde, das Verfahren bzw. die Schieblehre der eingangs genannten Art dahingehend weiterzubilden, daß eine sichere und zuverlässige Verarbeitung der Sensorsignale auch in Anwesenheit von starken Gleichspannungssignalen bzw. Signalen niedriger Frequenz möglich ist und daß auch hohe Bewegungsgeschwindigkeiten des Läufers auf dem Stab nicht zu Meßfehlern führen.

Gemäß dem eingangs genannten Verfahren wird diese Aufgabe erfindungsgemäß gelöst durch die Verfahrensschritte:

- periodisches Abtasten mindestens eines der Signale mit einer vorbestimmten Abtastrate;
- Speichern der abgetasteten Signalwerte;
- Vergleichen aufeinanderfolgender Signalwerte;
- Erzeugen eines ersten Kennwertes bei einer Signalzunahme bzw. eines zweiten Kennwertes bei einer Signalabnahme der aufeinanderfolgenden Signalwerte;
- Abspeichern des jeweils vorletzten Signalwertes als Maximum bei einem Übergang von dem ersten Kennwert auf den zweiten Kennwert bzw. als Minimum bei einem Übergang von dem zweiten Kennwert auf den ersten Kennwert;
- Bilden des arithmetischen Mittelwertes aufeinanderfolgender Maximum-Signalwerte und Minimum-Signalwerte;
- Abspeichern der Mittelwerte als Nullspannungs-Werte;
- Vergleichen der Signalwerte mit dem jeweiligen Nullspannungs-Wert;
- Erzeugen eines dritten Kennwertes bei über dem Nullspannungs-Wert liegenden Signalwerten, bzw. eines vierten Kennwertes bei unter dem Nullspannungs-Wert liegenden Signalwerten;
- Abspeichern des jeweils letzten Signalwertes als Nulldurchgang bei einem Übergang zwischen dem dritten Kennwert und dem vierten Kennwert; und
- Zählen der Anzahl der Nulldurchgänge.

Gemäß der eingangs genannten Schieblehre wird die der Erfindung zugrundeliegende Aufgabe dadurch gelöst, daß die Schaltmittel umfassen:

- Erste Mittel zum periodischen Abtasten mindestens eines der Signale mit einer vorbestimmten Abtastrate;
- zweite Mittel zum Speichern der abgetasteten Signalwerte;
- dritte Mittel zum Vergleichen aufeinanderfolgender Signalwerte;
- vierte Mittel zum Erzeugen eines ersten Kennwertes bei einer Signalzunahme bzw. eines zweiten Kennwertes bei einer Signalabnahme der aufeinanderfolgenden Signalwerte;
- fünfte Mittel zum Abspeichern des jeweils vorletzten Signalwertes als Maximum bei einem Übergang von dem ersten Kennwert auf den zweiten Kennwert, bzw. als Minimum bei einem Übergang von dem zweiten Kennwert auf den ersten Kennwert;
- sechste Mittel zum Bilden des arithmetischen Mittelwertes aufeinanderfolgender Maximum-Signalwerte und Minimum-Signalwerte;

- siebte Mittel zum Abspeichern der Mittelwerte als Nullspannungs-Wert;
- achte Mittel zum Vergleichen der Signalwerte mit dem jeweiligen Nullspannungs-Wert;
- neunte Mittel zum Erzeugen eines dritten Kennwertes bei über dem Nullspannungs-Wert liegenden Signalwerten, bzw. eines vierten Kennwertes bei unter dem Nullspannungs-Wert liegenden Signalwerten;
- zehnte Mittel zum Abspeichern des jeweils letzten Signalwertes als Nulldurchgang bei einem Übergang zwischen dem dritten Kennwert und dem vierten Kennwert; und
- elfte Mittel zum Zählen der Anzahl der Nulldurchgänge.

Die der Erfindung zugrundeliegende Aufgabe wird auf diese Weise vollkommen gelöst, weil einerseits durch ein periodisches Abtasten der Signale mit einer schnellen Abtastrate die Signale der Sensoren zuverlässig erfaßt werden können. Dadurch, daß die Nulldurchgänge mittelbar aus Maximum- bzw. Minimum-Werten der gemessenen Signale ermittelt werden, spielen Gleichspannungskomponenten bzw. gleichspannungsähnliche Komponenten keine Rolle, weil Maximum- bzw. Minimum-Werte bei den gemessenen Signalen immer charakteristisch hervortreten, auch wenn dem eigentlichen Meßsignal DC-Driften oder sonstige quasi-stationäre Signale als Störgrößen überlagert sind. Demgegenüber ist bei derart gestörten Meßbedingungen eine zuverlässige direkte Erfassung der Nulldurchgänge nicht möglich.

Um auch kurzzeitige Störungen ausmitteln zu können, ist es in vorteilhafter Weiterbildung ferner möglich, die ermittelten Nullspannungs-Werte ihrerseits einer zeitlichen Mittelung zu unterwerfen.

Bei einer bevorzugten Weiterbildung des erfindungsgemäßen Verfahrens wird ein Nulldurchgang erkannt, wenn beim Übergang zwischen dem dritten Kennwert und dem vierten Kennwert der Nullspannungs-Wert um einen vorbestimmten Mindestwert über- bzw. unterschritten wird.

Dieses Vorsehen einer Hysterese hat den Vorteil, daß mögliche Kurzzeit-Schwankungen ausgemittelt werden und ein Nulldurchgang erst dann erkannt wird, wenn der jeweils aktuelle Nullspannungs-Wert tatsächlich um einen merklichen Betrag über- bzw. unterschritten wurde.

Bei weiteren besonders bevorzugten Ausführungsformen des erfindungsgemäßen Verfahrens werden beide Signale mit derselben Abtastrate abgetastet, und die Richtung der Zählung der Anzahl der Nulldurchgänge eines der Signale wird abhängig von dem ersten bzw. zweiten Kennwert des dem Nulldurchgang entsprechenden Signalwertes des einen Signals eingestellt. Alternativ hängt die Zählrichtung dann entweder vom dritten bzw. vierten Kennwert des gleichzeitig mit dem Nulldurchgang des einen Signals von dem Sensor des anderen Signals erfaßten Signalwertes oder vom ersten bzw. zweiten Kennwert des dem Nulldurchgang vorhergehenden Nulldurchganges des anderen Signals ab.

In beiden Fällen wird eine zuverlässige Richtungserkennung für die Bewegung des Läufers auf dem Stab erreicht, und diese Richtungserkennung kann bei jedem Nulldurchgang jedes der Signale eingesetzt werden. Es stehen damit für jedes Rastermaß des Rasters insgesamt vier Meßpunkte bzw. Zählpunkte zur Verfügung, so daß die Auflösung der Längenmessung gleich einem Viertel des Rastermaßes des Rasters ist.

Bei einer anderen besonders bevorzugten Gruppe von Ausführungsbeispielen des erfindungsgemäßen Verfahrens werden die Signale um eine Schaltzeit der Schaltmittel zeitlich versetzt abgetastet, und beim Erkennen von Nulldurchgängen in beiden Signalen in zwei nur um die Schaltzeit versetzten Abtastungen wird der gemeinsame Nulldurchgang doppelt gezählt.

Diese Maßnahme hat zum einen den Vorteil, daß der wesentliche Teil der elektronischen Schaltmittel nur einmal vorgesehen werden muß, weil die beiden Signale nacheinander mit denselben Schaltmitteln getastet werden. Nun kann die hierbei technisch auftretende Schaltzeit zwischen den beiden Abtastvorgängen, die eine Konstante ist, zu Fehlern führen, weil diese Schaltzeit umso störender in die Ermittlung der Phasenverschiebung zwischen den beiden Signalen eingeht, je schneller der Läufer auf dem Stab bewegt wird. Im Extremfall kann infolge der endlichen Schaltzeit der Fall eintreten, daß die Nulldurchgänge beider Signale zusammenfallen bzw. zeitlich in demselben Fenster liegen, das durch die Abtastrate bestimmt ist. Um in diesem Falle Fehlzählungen zu vermeiden, ist nach dem genannten Ausführungsbeispiel des erfindungsgemäßen Verfahrens vorgesehen, diese Zählung doppelt zu werten.

Eine besonders gute Wirkung wird in diesem Falle zusätzlich dann erzielt, wenn ab dem genannten Erkennen eines doppelten Nulldurchganges die Zählrichtung verrastet wird.

Diese Maßnahme hat den Vorteil, daß die Verarbeitungzeit innerhalb der Schaltmittel verkürzt werden kann, weil nur noch die Nulldurchgänge erkannt, nicht jedoch zusätzlich noch die Zählrichtung bestimmt werden muß. Fehler können in diesem Falle deswegen nicht auftreten, weil bei hohen Verschiebegeschwindigkeiten des Läufers auf dem Stab eine Richtungsumkehr aus physikalischen Gründen extrem unwahrscheinlich ist, da eine Richtungsumkehr eine extreme Beschleunigungsspitze und damit große Betätigungskräfte erfordern würde. Solange daher die hohe Verschiebegeschwindigkeit des Läufers auf dem Stab andauert, ist es ausreichend, nur noch die Nulldurchgänge zu erfassen und in der zuletzt festgestellten Zählrichtung weiterzuzählen.

Dieser Zustand kann in einer weiteren Ausbildung der Erfindung dann wieder beendet werden, wenn erneut ein doppelter Nulldurchgang erkannt wird und damit ein Kriterium dafür vorliegt, daß die Verschiebegeschwindigkeit des Läufers auf dem Stab wieder auf einen geringeren Wert abgesunken ist, mit der Folge, daß nun wieder für jeden einzelnen Nulldurchgang die Zählrichtung neu bestimmt werden muß.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:

Fig. 1
in stark vergrößertem Maßstabe eine Querschnittsdarstellung, in Längsrichtung, durch einen Stab und einen Läufer einer erfindungsgemäßen Schieblehre, wie sie zur Durchführung des erfindungsgemäßen Verfahrens verwendet werden kann;

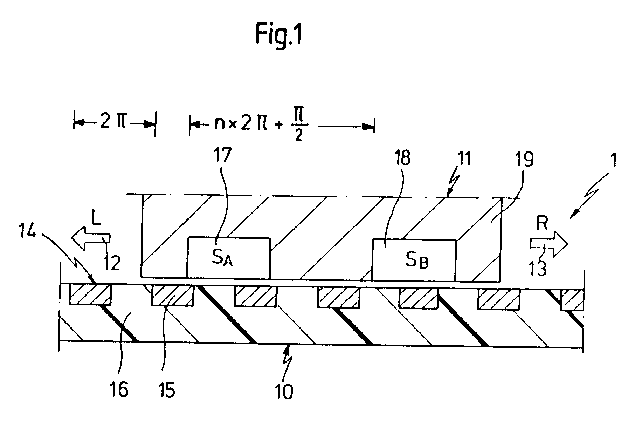

Fig. 2
eine Darstellung von typischerweise mit der Anordnung gemäß Fig. 1 erzeugten Meßsignalen;

Fig. 3 bis 6
vier typische Verläufe von Meßsignalen zur Erläuterung verschiedener Betriebsfälle der Schieblehre;

Fig. 7
eine Darstellung eines Meßsignals in Anwesenheit von Störsignalen;

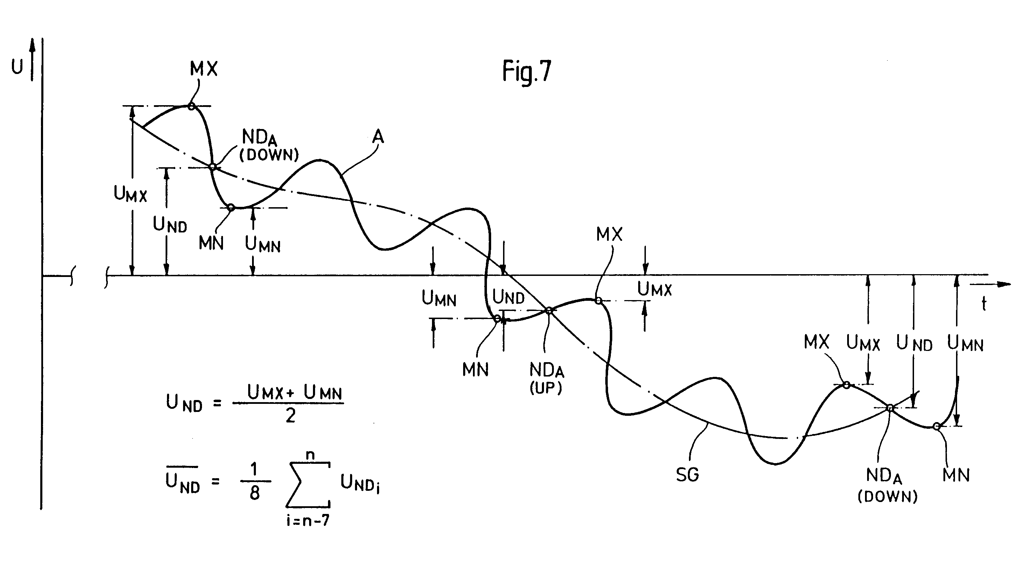

Fig. 8
einen vergrößerten Ausschnitt aus der Darstellung der Fig. 7 zur Erläuterung der Bestimmung von Kennwerten und von charakteristischen Punkten der Meßsignale;

Fig. 9 und 10
zwei Darstellungen zur Erläuterung des Einflusses der Verschiebegeschwindigkeit des Läufers auf dem Stab bei einer erfindungsgemäßen Schieblehre;

Fig. 11 und 12
zwei Flußdiagramme zur Erläuterung von zwei Varianten des erfindungsgemäßen Verfahrens.

In Fig. 1 ist in gegenüber der Realität stark vergrößertem Maßstabe eine Querschnittsdarstellung eines Teils einer Schieblehre 1 zu erkennen. Die Schnittdarstellung der Fig. 1 liegt in Längsrichtung eines Stabes 10 bzw. eines Läufers 11 einer elektronischen Schieblehre, wie sie im Prinzip aus der US-PS 4 226 024 bekannt ist.

Der Läufer 11 ist auf dem Stab 10 in Längsrichtung verschiebbar, wie mit einem Pfeil 12 für eine Bewegung nach links (L) und mit einem Pfeil 13 für eine Bewegung nach rechts (R) in Fig. 1 angedeutet ist.

Der Stab 10 trägt eine Markierung 14, die aus äquidistant verteilten Marken 15 aus ferromagnetischem Material besteht. Die Marken 15 können als Sprossen eines leiterförmigen Gebildes ausgestaltet sein, die in einem unmagnetischen Material 16 des Stabes 10 eingebettet sind.

Der Läufer 11 ist seinerseits mit Sensoren 17, 18 versehen, von denen der in Fig. 1 linke Sensor 17 mit $S_A$ bezeichnet ist, wodurch angedeutet werden soll, daß dieser Sensor 17 bzw. $S_A$ ein Signal A erzeugt, während der in Fig. 1 rechte Sensor 18 mit der Bezeichnung $S_B$ versehen ist, um anzudeuten, daß dieser ein Signal B erzeugt.

Die Sensoren 17, 18 sind innerhalb des Läufers 11 ebenfalls in unmagnetischem Material 19 eingebettet. Die Sensoren 17, 18 können als Induktiv-Sensoren, als Hall-Sensoren, als Feldplatten o. dgl. ausgebildet sein.

Es muß in diesem Zusammenhang erwähnt werden, daß die anhand der Fig. 1 angegebenen magnetfeldempfindlichen Sensoren 17, 18 nur als Beispiel zu verstehen sind, da es für die Erfindung ohne Belang ist, ob statt magnetfeldempfindlicher Sensoren kapazitive Sensoren, optische Sensoren oder andere Längenmeßsysteme eingesetzt werden.

Wichtig im vorliegenden Zusammenhang ist alleine, daß die Sensoren 17, 18 in Längsrichtung um einen bestimmten Betrag gegeneinander versetzt sind. Dieser Betrag ist so zu bemessen, daß die Signale A, B, die von den Sensoren 17, 18 beim Längsverschieben des Läufers 11 auf dem Stab 10 erzeugt werden und die einen näherungsweise sinusförmigen Verlauf haben, in ihren Nullstellen nicht zusammenfallen. Da dies bei 0° oder 180° oder einem Vielfachen von 180° der Fall wäre, ist bevorzugt, die Sensoren 17, 18 so anzuordnen, daß die von ihnen erzeugten Signale A, B eine Phasenverschiebung von 90° haben, wie dies an sich bekannt ist.

Bezeichnet man das Rastermaß der Marken 15 der Markierung 14 mit $2\pi$, so kann der Längsabstand der Sensoren 17, 18 voneinander beispielsweise $n \cdot 2 \cdot \pi + \pi/2$ betragen, wie dies in Fig. 1 eingetragen ist.

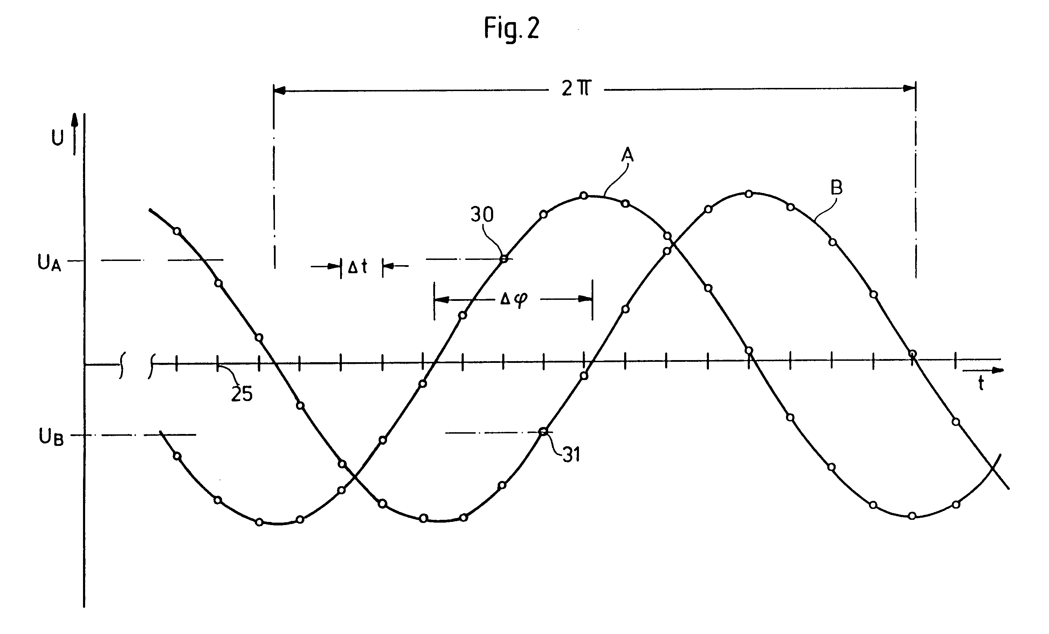

Bewegt man nun bei der Anordnung gemäß Fig. 1 den Läufer 11 mit normaler Geschwindigkeit auf dem Stab 10, so erzeugen die Sensoren 17, 18 Signale A und B, wie sie in Fig. 2 dargestellt sind.

Man erkennt, daß die Signale A und B im wesentlichen einen sinusförmigen Verlauf haben und daß ihre elektrische Periodendauer dem Betrag $2\pi$ entspricht. Die Phasenverschiebung beträgt, wie bereits erwähnt, 90°, was jedoch nicht zwingend ist, da auch von 90° abweichende Werte im Prinzip möglich sind, solange die Phasenverschiebung $\Delta\phi$ nicht 0°, 180° oder ein Vielfaches davon beträgt.

In Fig. 2 sind mit 25 Zeitmarken angedeutet, die einen periodischen Abtastvorgang symbolisieren sollen. Die Abtastrate, d.h. der Zeitabstand zwischen den Zeitmarken 25 beträgt $\Delta t$.

Bei einem praktischen Ausführungsbeispiel kann das geometrische Rastermaß $2\pi$ der Markierung 14 z.B. 1 mm betragen. Wird nun der Läufer 11 auf dem Stab 10 mit einer Geschwindigkeit von 0,1 m/s bewegt, so führt dies zu einer Frequenz der Signale A und B von 100 Hz bzw. einer Periodendauer der elektrischen Periodenlänge $2\pi$ von 10 m/s. Wird hingegen der Läufer 11 schneller auf dem Stab 10 bewegt, z.B. mit 1 m/s, ergibt sich eine Signalfrequenz von 1 kHz bzw. eine Periodendauer von 1 m/s.

Wenn man auch im letztgenannten Fall noch genügend Abtastpunkte haben möchte, so kann die Abtastrate z.B. bei 4 800 pro Sekunde liegen, was einer Abtastzeit $\Delta t$ von etwa 0,2 ms entspricht.

Durch die genannte periodische Abtastung der Signale A, B werden auf diesen Meßpunkte definiert, von denen einer im Signal A mit 30 und ein weiterer im Signal B mit 31 in Fig. 2 angedeutet sind. Jedem Meßpunkt 30, 31 entspricht ein bestimmter Signalwert, nämlich eine Spannung $U_A$ für den Meßpunkt 30 bzw. $U_B$ für den Meßpunkt 31.

Beim periodischen Abtasten der Signale A und B werden daher in jedem der Meßpunkte 30, 31 die entsprechenden Signalwerte $U_A$ bzw. $U_B$ erfaßt und festgehalten.

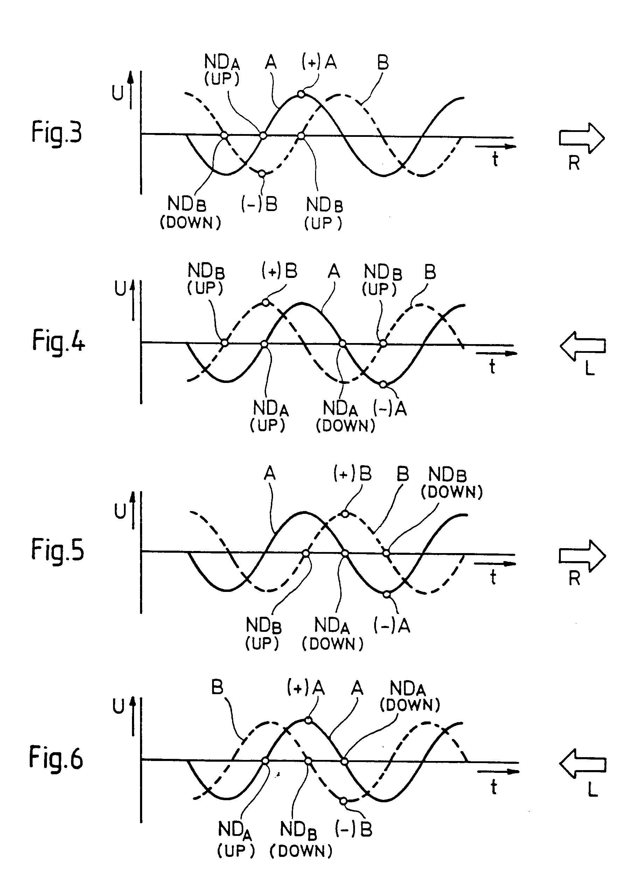

In den Fig. 3 bis 6 sind nun verschiedene Signalverläufe bei unterschiedlichen Betriebsbedingungen der Schieblehre 1 dargestellt.

Fig. 3 zeigt den Fall, daß der Läufer 11 in Richtung des Pfeiles 13, also nach rechts (R) auf dem Stab 10 verschoben wird. Das Signal A liegt nun im Zeitdiagramm links vom Signal B, und zwar um die genannten 90° phasenverschoben.

In Fig. 3 sind die Nulldurchgänge der Signale A und B mit $ND_A$ bzw. $ND_B$ bezeichnet. Die Richtung des Nulldurchganges, d.h. die Steigung der Signalkurven ist dabei jeweils mit den zusätzlichen Symbolen UP für positive Steigung bzw. DOWN für negative Steigung versehen. Außerdem sind positive Signalwerte mit dem Symbol (+) und negative Signalwerte mit dem Symbol (-) angegeben.

Betrachtet man nun in Fig. 3 den Nulldurchgang $ND_A$ des Signals A mit positiver Steigung (UP), so läßt sich für diesen Fall der Verschiebung des Läufers 11 auf dem Stab 10 nach rechts (R) als Zusatzkriterium angeben, daß im Zeitpunkt dieses Nulldurchgangs $ND_A$ (UP) das Signal B einen negativen Signalwert (-) B haben muß oder der vorausgegangene Nulldurchgang $ND_B$ (DOWN) des Signals B eine negative Steigung haben mußte.

In entsprechender Weise kann man für einen Nulldurchgang $ND_B$ (UP) des Signals B mit positiver Steigung angeben, daß ein gleichzeitiger positiver Signalwert (+) A des Signals A bzw. ein vorausgegangener Nulldurchgang $ND_A$ (UP) des anderen Signals A mit positiver Steigung auf eine Verschieberichtung nach rechts (R) hinweist.

Fig. 4 zeigt den entsprechenden Fall für Nulldurchgänge mit positiver Steigung in den Signalen A und B für den Fall, daß der Läufer 11 auf dem Stab 10 nach links (L) verschoben wurde.

Für $ND_A$ (UP) gilt, daß die Bewegungsrichtung (L) ist, wenn entweder gleichzeitig mit $ND_A$ (UP) ein positiver Signalwert (+) B des anderen Signals B oder dessen vorausgegangener Nulldurchgang $ND_B$ (UP) eine positive Steigung hatte. Für den Fall des Nulldurchganges $ND_B$ (UP) des B-Signals gilt die Verschieberichtung (L), wenn entweder gleichzeitig der Wert (-) A des anderen Signales A negativ oder der vorausgegangene Nulldurchgang $ND_A$ - (DOWN) des anderen Signales A eine negative Steigung hatte.

In den Fig. 5 und 6 sind die entsprechenden Fälle für Nulldurchgänge $ND_A$ (DOWN) und $ND_B$ - (DOWN) der Signale A und B mit negativer Steigung dargestellt. Aus den Fig. 5 und 6 sind in entsprechender Weise die zugehörigen Nebenbedingungen für das jeweils andere Signal für den Fall der Verschieberichtung (R) oder (L) zu entnehmen.

In Fig. 7 ist wiederum als Beispiel ein praktischer zeitlicher Verlauf des Signals A, jedoch in Anwesenheit einer Störgröße (SG) dargestellt. Die Störgröße SG wird im vorliegenden Zusammenhang als quasi-stationäre Größe angenommen, d.h. als gleichspannungsähnliche Größe, die mit sehr geringer Frequenz driftet. Ursache für derartige Störgrößen SG können Temperaturdriften, Druckeinflüsse, Feuchtigkeitseinflüsse u. dgl. sein.

Betrachtet man nun Fig. 7, so erkennt man, daß die Bestimmung eines Bezugspotentials relativ zur Abszisse des Diagramms in Fig. 7 schwierig ist.

Um nun trotz der Anwesenheit der Störgröße SG die Nulldurchgänge $ND_A$ ermitteln zu können, wird wie folgt vorgegangen:

Aus der Darstellung der Fig. 7 ist deutlich zu erkennen, daß markante Punkte des Signalverlaufs nicht deren Nulldurchgänge, sondern vielmehr deren Extremwerte sind. In diesem Zusammenhang sollen die Signalmaxima mit MX und die Signalminima mit MM im folgenden bezeichnet werden. Die zugehörigen Signalspannungen seien $U_{MX}$ bzw. $U_{MN}$.

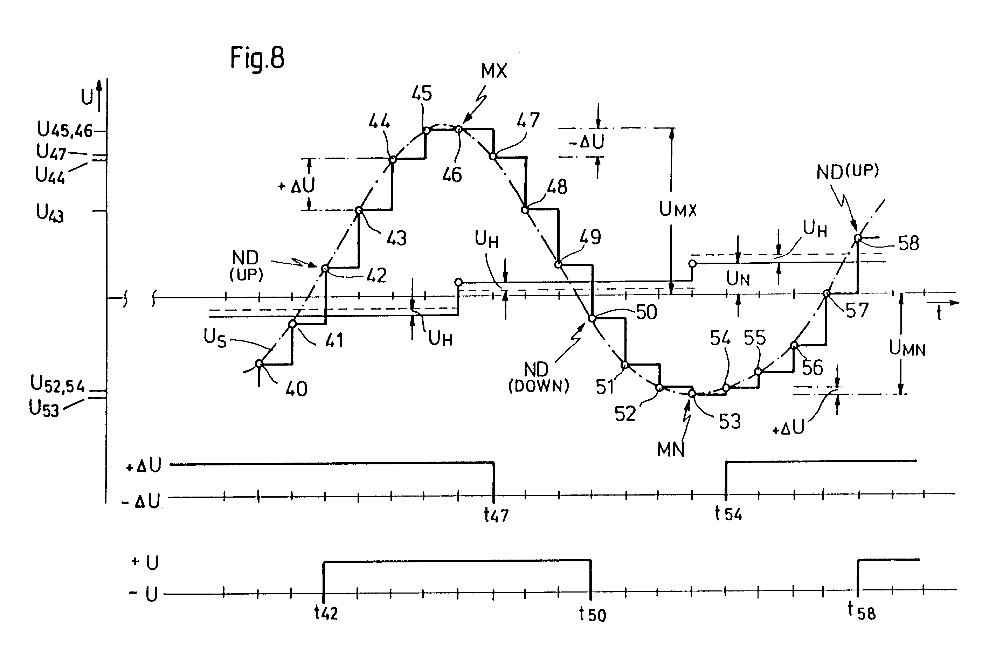

Wenn man nun in einer Weise, wie sie weiter unten anhand der Fig. 8 noch näher erläutert werden wird, die Maxima MX und Minima MN bestimmt, so kann man aus den zugehörigen Signalspannungen $U_{MX}$ und $U_{MN}$ durch Bildung des arithmetischen Mittelwertes eine Signalspannung $U_{ND}$

für den Nulldurchgang $ND_A$ ermitteln. Je nach Verlauf der Störgröße SG ist dieser arithmetische Mittelwert zwar nicht der exakte Nulldurchgang, er kann jedoch für die vorliegenden Anwendungsfälle als hinreichend gute Annäherung zugrundegelegt werden.

Eine weitere Ausmittelung kurzzeitiger Störeinflüsse ist in diesem Zusammenhang dadurch möglich, daß die ermittelten Signalwerte $U_{ND}$ für die Nulldurchgänge $ND_A$ wiederum gemittelt werden, und zwar zeitlich. So können beispielsweise jeweils die acht letzten Signalwerte $U_{ND}$ arithmetisch gemittelt werden, um auf diese Weise einen fiktiven, gemittelten Signalwert als Nullspannungs-Wert $\overline{U_{ND}}$ zu erhalten, auf den dann der jeweilige Signalverlauf bezogen wird.

Fig. 8 zeigt hierzu einen Ausschnitt aus der Darstellung der Fig. 7 in vergrößertem Maßstab.

In dem in Fig. 8 dargestellten Kurvenzug sind insgesamt 19 Meßpunkte 40 bis 58 zu erkennen. Die reale Signalspannung $U_S$ ist strichpunktiert dargestellt und verbindet die Meßpunkte 40 bis 58.

Da die Signalspannung $U_S$ in allen Meßpunkten 40 bis 48 abgetastet und gespeichert wird, ergibt sich der in Fig. 8 in Form einer Treppenfunktion angenäherte Signalverlauf in einem Speicher der Schieblehre.

Um nun die Extremwerte MX und MN zu bestimmen, wird für jeden der Meßpunkte 40 bis 58 festgestellt, ob die Signalspannung $U_S$ vom vorhergehenden Meßpunkte zum aktuellen Meßpunkt zugenommen oder abgenommen hat. Dies ist in einfacher Weise durch Vergleich der Signalspannungen $U_S$ der beiden Meßpunkte möglich. Für den Fall, daß eine Signalzunahme vorliegt, wird ein erster Kennwert $+\Delta U$ erzeugt, während im Falle einer Signalabnahme ein zweiter Kennwert $-\Delta U$ erzeugt wird. Dabei kann eine Schalthysterese berücksichtigt werden, indem nur dann z.B. eine Signalzunahme erkannt wird, wenn das Signal um mehr als einen vorbestimmten Mindestwert zunimmt.

Wie man aus Fig. 8 erkennen kann, liegt der erste Kennwert $+\Delta U$ bis zum Meßpunkt 47 vor, es ereignet sich dann ein Übergang zum zweiten Kennwert $-\Delta U$ mit fortschreitender Signalabnahme bis hin zum Meßpunkt 54, von dem ab wieder Signalzunahmen auftreten, die einem ersten Kennwert $+\Delta U$ entsprechen.

Die Zeitpunkte der Übergänge zwischen dem ersten Kennwert $+\Delta U$ und dem zweiten Kennwert $-\Delta U$ sind in Fig. 8 mit $t_{47}$ und $t_{54}$ bezeichnet.

Das vorliegende Verfahren erkennt nun zu den Zeitpunkten $t_{47}$ und $t_{54}$ den genannten Übergang und speichert dann den jeweils vorletzten Meßpunkt, im dargestellten Beispiel also die Meßpunkte 46 und 53 als Extremwerte, wobei 46 als Maximum MX und 53 als Minimum MN abgespeichert werden.

Es kann gelegentlich vorkommen, daß die Meßschwankung innerhalb einer Periodendauer "zittert", wenn höherfrequente Störungen dem relativ niedrigfrequenten Meßsignal überlagert werden. In diesem Falle würden Scheinmaxima und Scheinminima bestimmt, wenn jeder aktuelle Höchstwert und Mindestwert als Minimum oder Maximum erkannt würde. In diesem Falle kann man sich damit behelfen, sämtliche ermittelten Höchstwerte und Mindestwerte abzuspeichern und dann für jeweils eine Signalperiode des Grundsignales den ermittelten höchsten Höchstwert als Maximum und den ermittelten niedrigsten Mindestwert als Minimum für diese Signalperiode festzuhalten.

Nach der bereits zu Fig. 7 erläuterten Vorschrift kann nun aus den zugehörigen Signalspannungen $U_{46}$ und $U_{53}$ ein arithmetischer Mittelwert bestimmt werden. Dieser kann unmittelbar oder durch Mittelwertbildung mit vorausgegangenen Mittelwerten in das Nullspannungs-Signal $U_N$ umgesetzt werden.

Da sich dieser Vorgang nach jedem neu ermittelten Extremwert MX oder MN wiederholen kann, bedeutet dies, daß der jeweils aktuelle Nullspannungs-Wert $U_N$ jeweils zum Zeitpunkt des Auftretens eines neuen Extremwertes MX oder MN nachgestellt werden kann, wie in Fig. 8 mit einer Treppenkurve deutlich erkennbar ist. Der so jeweils aktualisierte Nullspannungs-Wert $U_N$ gilt dann so lange weiter, bis zum Zeitpunkt des Auftretens des nächsten Extremwertes MX oder MN ein neuer Nullspannungs-Wert $U_N$ ermittelt und entsprechend nachgestellt wurde.

Um nun den Meßpunkt zu ermitteln, der für die weitere Verarbeitung als Nulldurchgang ND gelten soll, wird weiterhin geprüft, ob die Signalspannungen $U_S$ jedes ermittelten Meßwertes 40 bis 58 betragsmäßig oberhalb oder unterhalb des jeweils geltenden Nullspannungs-Wertes $U_N$ liegt.

Dies wird mit einem dritten Kennwert +U bzw. -U bezeichnet.

Betrachtet man nun wieder den Verlauf der Fig. 8, so erkennt man, daß für die Meßpunkte 40 und 41 die Signalspannung $U_S$ noch jeweils unterhalb des dort geltenden Nullspannungs-Signals $U_N$ liegt, während das Meßsignal $U_S$ des Meßpunktes 42 bereits oberhalb des Nullspannungs-Signales $U_N$ liegt. Dies gilt auch für die weiteren Meßpunkte 43 bis 49, während für die nachfolgenden Meßpunkte 50 bis 57 wieder der vierte Kennwert -U erzeugt wird. Ab dem Meßpunkt 58 gilt wieder der dritte Kennwert +U.

Im Rahmen des vorliegenden Verfahrens wird nun das erstmalige Über- bzw. Unterschreiten des Nullspannungs-Signals $U_N$ als Nulldurchgang ND erkannt. Im Beispielsfall der Fig. 8 ist dies zu den Zeitpunkten $t_{42}$, $t_{50}$ und $t_{58}$ der Fall.

Kombiniert man nun die Übergänge zwischen drittem Kennwert +U und viertem Kennwert -U, d.h. das Auftreten von Nulldurchgängen ND mit dem dort jeweils vorliegenden ersten Kennwert +$\Delta$U oder zweiten Kennwert -$\Delta$U, so ist auch die Richtung des Nulldurchganges UP oder DOWN zu ermitteln.

So erkennt man bei dem in Fig. 8 dargestellten Beispiel, daß im Meßpunkt 42 ein Nulldurchgang vorliegt (Übergang zwischen drittem Kennwert +U und viertem Kennwert -U) und daß zu diesem Zeitpunkt ein erster Kennwert +$\Delta$U angezeigt wird. Die Richtung dieses Nulldurchganges ND im Meßpunkt 42 ist also UP. Entsprechend gilt im Zeitpunkt $t_{50}$ für den zweiten Nulldurchgang, daß dort der zweite Kennwert -$\Delta$U vorliegt, so daß hier die Richtung DOWN ist. Im dritten in Fig. 8 dargestellten Nulldurchgang im Meßpunkt 58 herrscht wieder der erste Kennwert +$\Delta$U vor, so daß die Richtung dieses Nulldurchganges wieder mit UP gekennzeichnet werden kann.

In Fig. 8 ist ferner zu erkennen, daß das Nullspannungs-Signal $U_N$ aus Gründen der Erhöhung der Meßsicherheit jeweils noch um eine Hysteresespannung $U_H$ erhöht bzw. vermindert wird, um ein Pendeln der Meßwerte um das Nullspannungs-Signal herum zu vermeiden. Diese Hysteresespannung $U_H$ wird jeweils so gepolt, daß die Signalspannung $U_S$ sowohl das Nullspannungs-Signal $U_N$ wie auch zusätzlich die Hysteresespannung $U_H$ überschreitenmuß, damit ein Nulldurchgang ND erkannt wird.

Fig. 9 zeigt nochmals im Zeitmaßstab der Fig. 8 die Signalverläufe A und B.

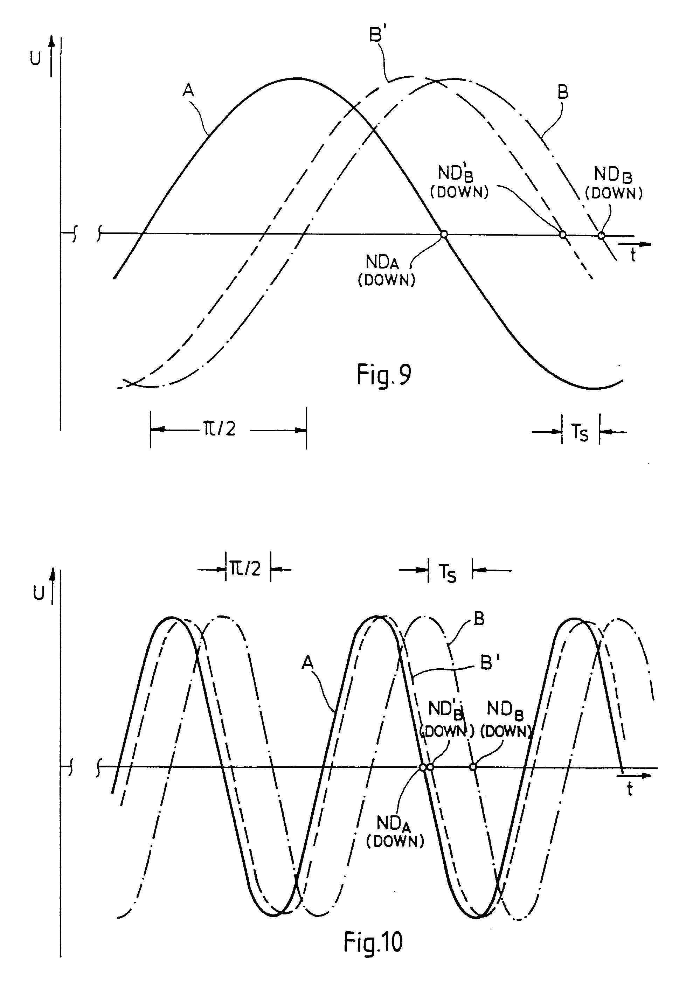

Zusätzlich ist mit $T_S$ noch eine Schaltzeit eingezeichnet. Diese Schaltzeit ist deswegen zu berücksichtigen, weil die anhand der Fig. 8 erläuterte Signalabtastung und -verarbeitung aus wirtschaftlichen Gründen zweckmäßigerweise für beide Signale A und B mit denselben Schaltmitteln vorgenommen werden soll. Dies setzt jedoch voraus, daß zunächst eines der Signale A und erst dann das andere Signal B abgetastet und verarbeitet werden kann. Hierdurch entsteht ein geringfügiger zeitlicher Versatz zwischen den beiden Vorgängen, der mit der Schaltzeit $T_S$ in Fig. 9 charakterisiert wird. Diese Schaltzeit $T_S$ ist deswegen von Bedeutung, weil sie eine Konstante ist und daher zu einem systematischen Fehler bei der Bestimmung der Phasenlage der Signale A und B zueinander führt. Die Größe dieses Phasenfehlers hängt naturgemäß von der Frequenz der Signale A und B und damit von der Verschiebegeschwindigkeit des Läufers 11 auf dem Stab 10 ab, da die Schaltzeit $T_S$ wie eine Verzögerung wirkt.

In Fig. 9 ist nun der Fall dargestellt, daß der Läufer 11 relativ langsam auf dem Stab 10 verschoben wird. Mit A ist der Verlauf des einen Signals und mit B der Verlauf des anderen Signals angedeutet, wobei B in der strichpunktierten Darstellung die theoretische Lage dieses Signalverlaufs zum Signal A darstellt. Aufgrund der erwähnten Schaltzeit $T_S$ ist jedoch der gemessene Verlauf des Signals B bei B' einzuzeichnen, wobei $T_S$ gerade die Phasenverschiebung zwischen dem theoretischen Signal B und dem real gemessenen Signal B' charakterisiert.

Für die vorliegende Signalauswertung bedeutet dies, daß der Nulldurchgang $ND_B$ (DOWN) des B-Signals sich in Fig. 9 nach links in eine Position $ND_B'$ (DOWN) verschiebt, dieser Nulldurchgang also an den Nulldurchgang $ND_A$ (DOWN) des Signals A heranrückt.

Dies ist zunächst noch nicht kritisch, weil durch diese Verschiebung sich die in den Fig. 3 bis 6 dargestellten Betriebsfälle bzw. die dort erläuterten Kriterien für eine Feststellung der Verschieberichtung noch nicht ändern. Technisch gesehen liegt dies daran, daß die Schaltzeit $T_S$ beim Fall der Fig. 9 noch wesentlich kleiner ist als die Grund-Phasenverschiebung $\pi/2$ zwischen den Signalen A und B.

Wird nun jedoch die Verschiebegeschwindigkeit des Läufers 11 auf dem Stab 10 erhöht, so ergibt sich der Fall der Fig. 10, und man erkennt, daß nun die Schaltzeit $T_S$ dieselbe Größenordnung wie die Grund-Phasenverschiebung $\pi/2$ hat. Der real gemessene Nulldurchgang $ND_B'$ (DOWN) des B'-Strich-Signals ist nun unmittelbar an den Nulldurchgang $ND_A$ (DOWN) des A-Signals herangerutscht.

Fig. 10 markiert daher den Übergang zu einem Zustand, ab dem eine Richtungserkennung mit den bislang geschilderten Kriterien nicht mehr möglich ist, weil bei einer noch höheren Verschiebegeschwindigkeit des Läufers 11 auf dem Stab 10, als dies in Fig. 10 dargestellt ist, der Nulldurchgang $ND_B'$ (DOWN) weiter nach links und über den Nulldurchgang $ND_A$ (DOWN) des einen Signals A herüberrutschen würde. Dann gelten jedoch nicht mehr die anhand der Fig. 3 bis 6 entwickelten Kriterien für ein Erkennen der Richtung der Verschiebung des Läufers 11 auf dem Stab 10.

Um derartige Fehler auszuschließen, ist im Rahmen des vorliegenden Verfahrens vorgesehen, eine Koinzidenz der Nulldurchgänge $ND_A$ und $ND_B'$ innerhalb eines Meßfensters, d.h. innerhalb einer Zeit $\Delta t$ zu erkennen. Wenn dieser Fall eintritt, so ist dies ein Kriterium für das Erreichen eines vorgegebenen oberen Geschwindigkeitswertes der Verschiebung des Läufers 11 auf dem Stab 10. Diese Erkennung bewirkt zweierlei:
Zum einen wird in diesem Zeitfenster $\Delta t$ eine doppelte Zählung vorgenommen, weil ja in diesem Zeitfenster $\Delta t$ zwei Nulldurchgänge erkannt wurden. Außerdem wird ab dem Auftreten dieses Zustandes überhaupt keine Richtungserkennung mehr vorgenommen, also die anhand der Fig. 3 bis 6 entwickelten Kriterien für die Erkennung der Verschieberichtung nicht mehr angewendet. Stattdessen wird mit der Zählrichtung weitergezählt, die zum Zeitpunkt des Erkennens der Koinzidenz der Nulldurchgänge $ND_A$ und $ND_B$ vorlag.

Physikalisch ist es unbedenklich, ab dem genannten Zeitpunkt auf eine individuelle Bestimmung der Zählrichtung zu verzichten. Wenn nämlich der Läufer 11 mit so hoher Geschwindigkeit auf dem Stab 10 bewegt wird, so ist eine Richtungsumkehr bei einer solch hohen Geschwindigkeit wegen der damit verbundenen Beschleunigungsänderung und damit des verbundenen Kraftaufwandes extrem unwahrscheinlich. Man kann daher aufgrund dieser physikalischen Gegebenheiten davon ausgehen, daß ab dem Erreichen des hohen Geschwindigkeitswertes der Verschiebung die Verschieberichtung so lange beibehalten wird, bis der Geschwindigkeits-Grenzwert wieder unterschritten wurde. Dies kann jedoch in derselben Weise, wie vorstehend geschildert, erkannt werden, um ab diesem Erkennen der zweiten Koinzidenz der Nulldurchgänge $ND_A$ und $ND_B$ wieder auf den ursprünglichen Betrieb umzuschalten, d.h. von diesem Zeitpunkt ab wieder bei jedem Nulldurchgang zugleich die Verschieberichtung festzustellen.

Die vorstehende Überlegung galt für den Fall der asynchronen Abtastung, d.h. für den Fall, daß die beiden Meßkanäle mit einer einkanaligen Abtasteinrichtung erfaßt werden, deren Eingang zwischen den beiden Meßkanälen hin- und hergeschaltet wird, wodurch die ausführlich erläuterten Fehler infolge der endlichen Umschaltzeit entstehen.

Verwendet man stattdessen eine synchrone Signalabtastung, bei der jedem Meßkanal eine eigene Abtasteinheit zugeordnet wird, so kann der genannte Fehler prinzipiell unterdrückt werden, weil keine Umschaltzeit auftritt. Allerdings bedeutet dies nicht, daß bei synchroner Messung keine Koinzidenz von Nulldurchgängen innerhalb eines Meßfensters auftreten kann, dieser Effekt kann auch bei synchroner Abtastung auftreten, allerdings naturgemäß erst bei sehr viel höheren Frequenzen, d.h. Verschiebegeschwindigkeitendes Läufers auf dem Stab. Für den Fall des Synchronbetriebes kann daher die im Rahmen der vorliegenden Anmeldung erläuterte Vorgehensweise ebenso eingesetzt werden, um die erst bei höheren Frequenzen auftretenden Fehler zu beseitigen.

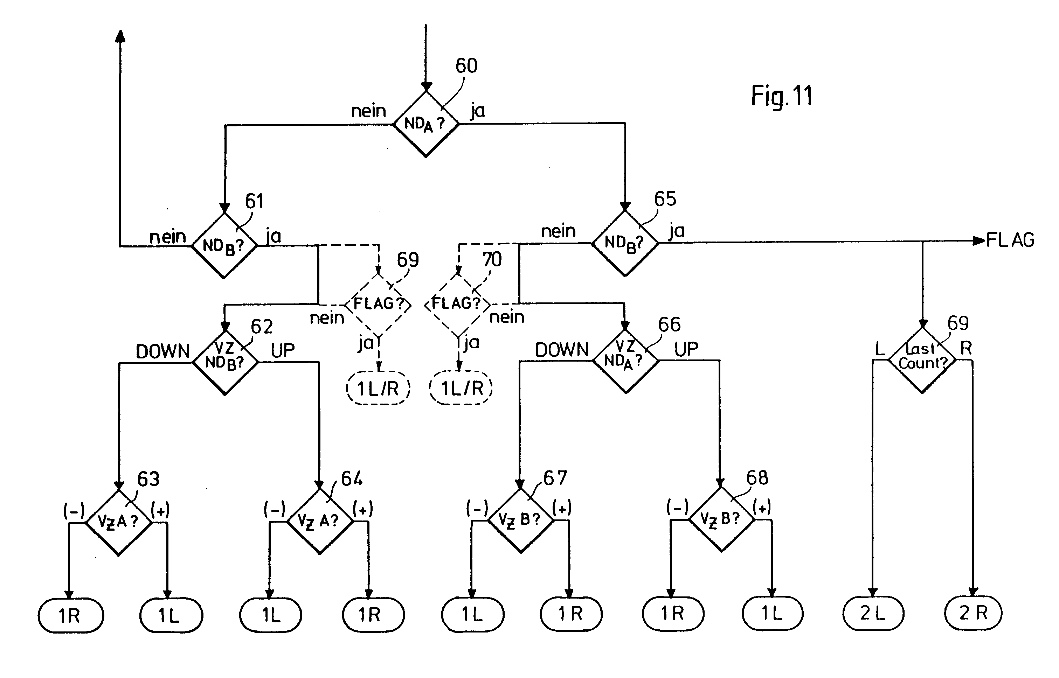

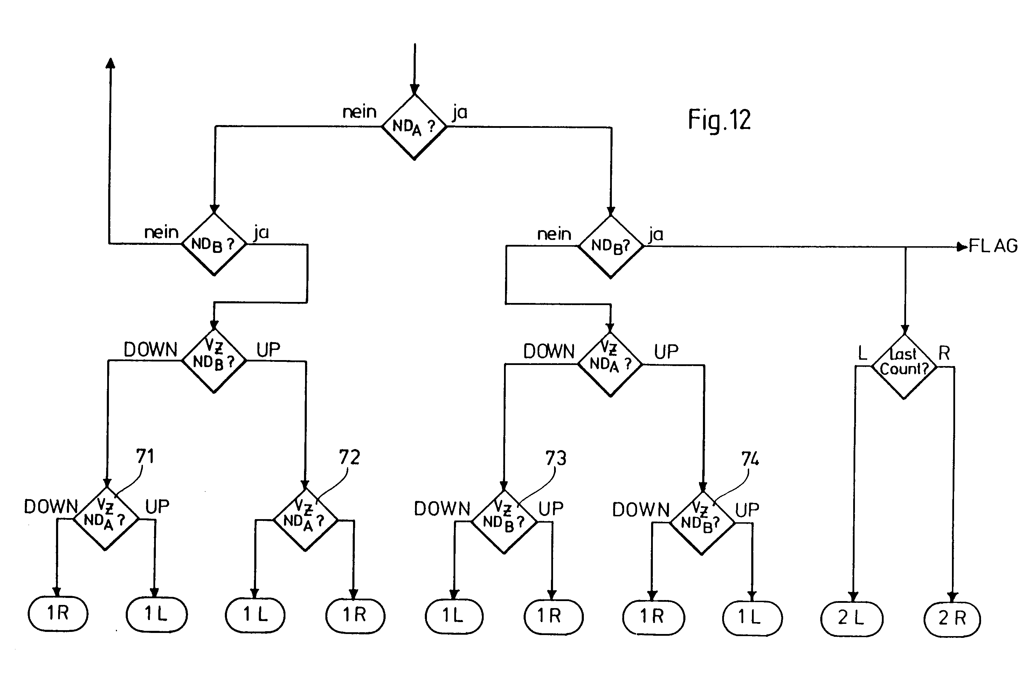

Die zuvor geschilderte Vorgehensweise ist in den Fig. 11 und 12 für zwei Varianten nochmals in Form eines Flußdiagramms dargestellt.

In Fig. 11 bezeichnet 60 im Eingang einen Entscheidungsblock, mit dem bei der Aufnahme jedes Meßwertes (z.B. der Meßwerte zu den Meßpunkten 40 bis 58 in Fig. 8) festgestellt wird, ob nach den anhand der Fig. 8 erläuterten Kriterien ein Nulldurchgang im Signal A vorliegt.

Ist dies nicht der Fall, wird im Entscheidungsblock 61 gefragt, ob zu diesem Zeitpunkt im parallelen Kanal des Signals B ein Nulldurchgang vorliegt. Ist auch dieses nicht der Fall, wird nichts weiter veranlaßt, sondern vielmehr zum nächsten Meßpunkt übergegangen.

Wurde jedoch im Entscheidungsblock 61 erkannt, daß zwar kein Nulldurchgang $ND_A$ des A-Signales, wohl jedoch ein Nulldurchgang $ND_B$ des B-Signales vorlag, wird zum nächsten Entscheidungsblock 62 übergegangen, in dem festgestellt wird, ob der aufgetretene Nulldurchgang $ND_B$ eine negative Steigung (DOWN) oder eine positive Steigung (UP) aufweist, wie dies oben zu Fig. 8 erläutert wurde.

Im Falle einer negativen Steigung (DOWN) wird nun in einem weiteren Entscheidungsblock 63 geprüft, ob im Zeitpunkt des Auftretens des soeben ermittelten Nulldurchgangs $ND_B$ die Polarität bzw. das Vorzeichen $V_Z$ des parallelen Signals A positiv oder negativ ist, wozu lediglich der dritte Kennwert +U bzw. der vierte Kennwert -U abgefragt werden muß. Stellt sich heraus, daß das Signal A in diesem Zeitpunkt eine negative Polarität zum Nullspannungs-Signal $U_N$ hatte, so wird eine Rechtsverschiebung (R) erkannt und der Verschiebungszähler um einen Schritt in diese Richtung weitergeschaltet. Im Falle, daß das Signal A eine positive Polarität hatte, wird entsprechend um einen Schritt in Linksrichtung (L) weitergezählt.

Entsprechendes geschieht in einem Entscheidungsblock 64 für den Fall, daß für den ermittelten Nulldurchgang $ND_B$ eine positive Steigung (UP) ermittelt wurde.

Wurde nun bereits im ersten Entscheidungsblock 60 festgestellt, daß ein Nulldurchgang $ND_A$ im A-Signal vorliegt, so wird alsdann in einem weiteren Entscheidungsblock 65 gefragt, ob gleichzeitig auch ein Nulldurchgang $ND_B$ im parallelen B-Signal vorliegt.

Wird dies verneint, so geschieht die weitere Auswertung in Entscheidungsblöcken 66 bis 68 in Analogie zu den vorstehend erläuterten Entscheidungsblöcken 62 bis 64.

Als Ergebnis der bislang geschilderten Vorgehensweise ergeben sich insgesamt acht Betriebszustände, die jeweils eine Zählung in Links-Richtung (L) oder in Rechts-Richtung (R) um einen Schritt bewirken. Diese Art Betriebsfälle entsprechen den acht Betriebsfällen, die weiter oben anhand der Fig. 3 bis 6 bereits erläutert wurden.

Als Besonderheit kommt nun im Entscheidungsblock 65 hinzu, daß dort auch der weiter oben anhand der Fig. 9 und 10 erläuterte Fall erkannt werden kann, daß nämlich gleichzeitig ein Auftreten von Nulldurchgängen $ND_A$ und $ND_B$ in beiden Signalen A und B, also eine Koinzidenz dieser beiden Nulldurchgänge $ND_A$ und $ND_B$, erkannt werden kann.

In diesem Falle wird einerseits ein Merker (FLAG) gesetzt und zum anderen abgefragt, in welche Richtung beim vorausgegangenen Zählschritt gezählt wurde. Dies geschieht in einem weiteren Entscheidungsblock 69. Wird dabei festgestellt, daß die vorausgegangene Zählrichtung in Links-Richtung (L) zählte, so wird nun um zwei Schritte in Links-Richtung (L) weitergezählt bzw. um zwei Schritte in Rechts-Richtung (R), wenn der vorhergehende Zählschritt ebenfalls in Rechts-Richtung (R) geschah.

Das Setzen des Merkers bewirkt nun, daß die nächsten Zählungen direkt vom "Ja"-Ausgang des Entscheidungsblocks 61 bzw. vom "Nein"-Ausgang des Entscheidungsblocks 65 vorgenommen werden, da die nachfolgende Richtungserkennung über die Entscheidungsblöcke 62 bis 64 bzw. 66 bis 68 bei den jetzt vorliegenden hohen Verschiebegeschwindigkeiten des Läufers 11 auf dem Stab 10 nicht mehr erforderlich ist.

Außerdem bewirkt das Setzen des Merkers "FLAG", daß beim nächsten Auftreten einer Koinzidenz von Nulldurchgängen $ND_A$ und $ND_B$ zwar diese eine Zählung wieder doppelt vorgenommen wird (Entscheidungsblock 69), andererseits aber wieder auf den Normalbetrieb unter Einschluß der Entscheidungsblöcke 62 bis 64 und 66 bis 68 übergegangen wird.

Dies ist in Fig. 11 mit zwei weiteren Entscheidungsblöcken 69 und 70 mit gestrichelter Signalführung angedeutet.

Fig. 12 zeigt demgegenüber die bereits weiter oben erläuterte Variante, wonach das letzte Entscheidungskriterium für die Richtung der Verschiebebewegung nicht (Entscheidungsblöcke 63, 64, 67, 68 in Fig. 11) die Polarität des jeweils anderen Signals, sondern vielmehr die Richtung des vorhergehenden Nulldurchganges ND beim jeweils anderen Signal ist. In Fig. 12 dienen hierzu weitere Entscheidungsblöcke 71 bis 74. Im übrigen ist der Ablauf beim Flußdiagramm der Fig. 12 identisch mit dem der Fig. 11, einschließlich der dazu erläuterten Besonderheiten bei hohen Verschiebegeschwindigkeiten.

Es versteht sich, daß im Rahmen der vorliegenden Erfindung statt der Anzahl der Nulldurchgänge selbst auch andere Ereignisse gezählt werden können, die mit dem Nulldurchgang zusammenhängen, z.B. die Anzahl der Maxima oder der Minima.

**Patentansprüche**

1.  Verfahren zum Messen einer Länge mittels einer elektronischen Schieblehre (1) mit einem Stab (10) und einem auf dem Stab (10) längsverschiebbar angeordneten Läufer (11), mit einer auf dem Stab (10) angebrachten Markierung (14), die in Längsrichtung mit einem Rastermaß ($2\pi$) periodisch angeordnete Längsmarken (15) umfaßt, mit mindestens zwei an dem Läufer (11) angeordneten und auf die Markierung (14) ansprechenden Sensoren (17, 18), die in Längsrichtung zueinander um einen Betrag ($n\,\pi \pm \pi/2$) versetzt sind, der ungleich dem n-fachen des halben Rastermaßes ($\pi$) ist, wobei n eine ganze Zahl ist, derart, daß beim Verschieben des Läufers (11) auf dem Stab (10) von den Sensoren (17, 18) erzeugte periodische Signale (A, B) eine Phasenverschiebung ($\Delta\phi$) zueinander aufweisen, und mit Schaltmitteln zum Addieren bzw. Subtrahieren von aus den Signalen (A, B) abgeleiteten Impulsen in Abhängigkeit vom Vorzeichen der Phasenverschiebung ($\Delta\phi$), gekennzeichnet durch die Verfahrensschritte:
- Periodisches Abtasten mindestens eines der Signale (A, B) mit einer vorbestimmten Abtastrate ($\Delta t$);
- Speichern der abgetasteten Signalwerte ($U_A$, $U_B$);
- Vergleichen aufeinanderfolgenden Signalwerte ($U_{40}$-$U_{58}$);
- Erzeugen eines ersten Kennwertes ($+\Delta U$) bei einer Signalzunahme bzw. eines zweiten Kennwertes ($-\Delta U$) bei einer Signalabnahme der aufeinanderfolgenden Signalwerte ($U_{40}$-$U_{58}$);
- Abspeichern des jeweils vorletzten Signalwertes ($U_{46}$, $U_{53}$) als Maximum (MX) bei einem Übergang von dem ersten Kennwert ($+\Delta U$) auf den zweiten Kennwert ($-\Delta U$) bzw. als Minimum (MN) bei einem Übergang von dem zweiten Kennwert ($-\Delta U$) auf den ersten Kennwert ($+\Delta U$);
- Bilden des arithmetischen Mittelwertes aufeinanderfolgender Maximum-Signalwerte ($U_{46}$) und Minimum-Signalwerte ($U_{53}$);
- Abspeichern der Mittelwerte als Nullspannungs-Werte ($U_N$);
- Vergleichen der Signalwerte ($U_{40}$-$U_{58}$) mit dem jeweiligen Nullspannungs-Wert ($U_N$);
- Erzeugen eines dritten Kennwertes ($+U$) bei über dem Nullspannungs-Wert ($U_N$) liegenden Signalwerten ($U_{42}$-$U_{49}$, $U_{58}$), bzw. eines vierten Kennwertes ($-U$) bei unter dem Nullspannungs-Wert ($U_N$) liegenden Signalwerten ($U_{40}$-$U_{41}$, $U_{50}$-$U_{57}$);
- Abspeichern des jeweils letzten Signalwertes ($U_{42}$, $U_{50}$, $U_{58}$) als Nulldurchgang

(ND) bei einem Übergang zwischen dem dritten Kennwert ($+U$) und dem vierten Kennwert ($-U$); und
- Zählen der Anzahl der Nulldurchgänge (ND).

2. Verfahren nach Anspruch 1 oder 2, dadurch gekennzeichnet, daß eine Mehrzahl aufeinanderfolgender Nullspannungs-Werte ($U_N$) gemittelt und die Signalwerte ($U_{40}$-$U_{58}$) mit dem gemittelten Nullspannungs-Wert verglichen werden.

3. Verfahren nach Anspruch 1 oder 2, dadurch gekennzeichnet, daß ein Nulldurchgang (ND) erkannt wird, wenn beim Übergang zwischen dem dritten Kennwert ($+U$) und dem vierten Kennwert ($-U$) der Nullspannungs-Wert ($U_N$) um einen vorbestimmten Mindestwert ($U_H$) über- bzw. unterschritten wird.

4. Verfahren nach einem oder mehreren der Ansprüche 1 bis 3, dadurch gekennzeichnet, daß beide Signale (A, B) mit derselben Abtastrate ($\Delta t$) abgetastet werden, und daß die Richtung der Zählung der Anzahl der Nulldurchgänge ($ND_A$) eines der Signale (A) abhängig von dem ersten ($+\Delta U$) bzw. zweiten ($-\Delta U$) Kennwert (UP, DOWN) des dem Nulldurchgang ($ND_A$) entsprechenden Signalwertes ($U_{42}$, $U_{50}$, $U_{58}$) des einen Signals (A) und abhängig von dem dritten Kennwert ($+U$) bzw. vierten Kennwert ($-U$) des gleichzeitig mit dem Nulldurchgang ($ND_A$) des einen Signals (A) von dem Sensor (18) des anderen Signals (B) erfaßten Signalwertes ($U_B$) eingestellt wird.

5. Verfahren nach einem oder mehreren der Ansprüche 1 bis 3, dadurch gekennzeichnet, daß beide Signale (A, B) mit derselben Abtastrate ($\Delta t$) abgetastet werden, und daß die Richtung der Zählung der Anzahl der Nulldurchgänge ($ND_A$) eines der Signale (A) abhängig von dem ersten ($+\Delta U$) bzw. zweiten ($-\Delta U$) Kennwert (UP, DOWN) des dem Nulldurchgang ($ND_A$) entsprechenden Signalwertes ($U_{42}$, $U_{50}$, $U_{58}$) des einen Signals (A) und abhängig von dem ersten ($+\Delta U$) bzw. zweiten ($-\Delta U$) Kennwert (UP, DOWN) des dem Nulldurchgang ($ND_A$) vorhergehenden Nulldurchgangs ($ND_B$) des anderen Signals ($U_B$) eingestellt wird.

6. Verfahren nach einem oder mehreren der Ansprüche 1 bis 5, dadurch gekennzeichnet, daß die Signale (A, B) um eine Schaltzeit ($T_S$) der Schaltmittel zeitlich versetzt abgetastet werden, und daß beim Erkennen von Nulldurchgängen ($ND_A$, $ND_B$) in beiden Signalen (A, B) in zwei nur um die Schaltzeit ($T_S$) versetzten Abtastungen der gemeinsame Nulldurchgang ($ND_A$, $ND_B$) doppelt gezählt wird.

7. Verfahren nach Anspruch 6, dadurch gekennzeichnet, daß ab einem Erkennen von Nulldurchgängen ($ND_A$, $ND_B$) in beiden Signalen (A, B) in zwei nur um die Schaltzeit ($T_S$) versetzten Abtastungen die Zählrichtung (L, R) verrastet wird.

8. Verfahren nach Anspruch 7, dadurch gekennzeichnet, daß die Verrastung bei einem darauffolgenden erneuten Erkennen von Nulldurchgängen ($ND_A$, $ND_B$) in beiden Signalen (A, B) in zwei nur um die Schaltzeit ($T_S$) versetzten Abtastungen wieder entrastet wird.

9. Elektronische Schieblehre mit einem Stab (10) und einem auf dem Stab (10) längs verschiebbar angeordneten Läufer (11), mit einer auf dem Stab (10) angebrachten Markierung (14), die in Längsrichtung mit einem Rastermaß ($2\pi$) periodisch angeordnete Längsmarken (15) umfaßt, mit mindestens zwei an dem Läufer (11) angeordneten und auf die Markierung (14) ansprechenden Sensoren (17, 18), die in Längsrichtung zueinander um einen Betrag ($n\pi \pm \pi/2$) versetzt sind, der ungleich dem n-fachen des halben Rastermaßes ($\pi$) ist, wobei n eine ganze Zahl ist, derart, daß beim Verschieben des Läufers (11) auf dem Stab (10) von den Sensoren (17, 18) erzeugte periodische Signale (A, B) eine Phasenverschiebung ($\Delta\phi$) zueinander aufweisen, und mit Schaltmitteln zum Addieren bzw. Subtrahieren von aus den Signalen (A, B) abgeleiteten Impulsen in Abhängigkeit vom Vorzeichen der Phasenverschiebung ($\Delta\phi$), dadurch gekennzeichnet, daß die Schaltmittel ferner umfassen:

- Erste Mittel zum periodischen Abtasten mindestens einer der Signale (A, B) mit einer vorbestimmten Abtastrate ($\Delta t$);
- zweite Mittel zum Speichern der abgetasteten Signalwerte ($U_A$, $U_B$);
- dritte Mittel zum Vergleichen der aufeinanderfolgenden Signalwerte ($U_{40}$-$U_{58}$);
- vierte Mittel zum Erzeugen eines ersten Kennwertes ($+\Delta U$) bei einer Signalzunahme bzw. eines zweiten Kennwertes ($-\Delta U$) bei einer Signalabnahme der aufeinanderfolgenden Signalwerte ($U_{40}$-$U_{58}$);
- fünfte Mittel zum Abspeichern des jeweils vorletzten Signalwertes ($U_{46}$, $U_{53}$) als Maximum (MX) bei einem Übergang von dem ersten Kennwert ($+\Delta U$) auf den zweiten Kennwert ($-\Delta U$) bzw. als Minimum (MN) bei einem Übergang von dem zweiten Kennwert ($-\Delta U$) auf den ersten Kennwert ($+\Delta U$);
- sechste Mittel zum Bilden des arithmetischen Mittelwertes aufeinanderfolgender Maximum-Signalwerte ($U_{46}$) und Minimum-Signalwerte ($U_{53}$);
- siebte Mittel zum Abspeichern der Mittelwerte als Nullspannungs-Werte ($U_N$);
- achte Mittel zum Vergleichen der Signalwerte ($U_{40}$-$U_{58}$) mit dem jeweiligen Nullspannungs-Wert ($U_N$);
- neunte Mittel zum Erzeugen eines dritten Kennwertes ($+U$) bei über dem Nullspannungs-Wert ($U_N$) liegenden Signalwerten ($U_{42}$-$U_{49}$, $U_{58}$), bzw. eines vierten Kennwertes ($-U$) bei unter dem Nullspannungs-Wert ($U_N$) liegenden Signalwerten ($U_{40}$-$U_{41}$, $U_{50}$-$U_{57}$);
- zehnte Mittel zum Abspeichern des jeweils letzten Signalwertes ($U_{42}$, $U_{50}$, $U_{58}$) als Nulldurchgang (ND) bei einem Übergang zwischen dem dritten Kennwert ($+U$) und dem vierten Kennwert ($-U$); und
- elfte Mittel zum Zählen der Anzahl der Nulldurchgänge (ND).

**Claims**

1. A method for measuring a length by utilizing an electronic slide caliper (1) having a rule (10) and a slide (11) arranged on the rule (10) for displacement thereon in a longitudinal direction, a marking (14) being provided on the rule (10), the marking (14) comprising longitudinal marks ($2\pi$) distributed periodically in the longitudinal direction at a grid pitch ($2\pi$), the caliper (1), further, comprising at least two sensors (17, 18) arranged on the slide (11) and corresponding to the marking (14), the sensors (17, 18) being offset relative to each other by a predetermined amount ($n\pi \pm \pi/2$) unequal to n times half the grid pitch ($\pi$) with n being an integer number so that when the slide (11) is displaced along the rule (10), periodic voltage signals (A, B) generated by the sensors (17, 18) are offset in phase ($\Delta\phi$) relative to each other, the caliper (1) also comprising computing means for adding and subtracting, respectively, pulses derived from the signals (A, B) as a function of the sign of the phase offset ($\Delta\phi$), the method comprising the steps of:

- Scanning periodically at least one of the signals (A, B) at a predetermined scanning rate ($\Delta t$);
- storing the scanned signal values ($U_A$, $U_B$);

- comparing successive ones of the scanned signal values ($U_{40}$ - $U_{58}$);
- generating a first characteristic value ($+ \Delta U$) upon occurrence of a rise and a second characteristic value ($- \Delta U$), respectively, upon occurrence of a decrease between the successive signal values ($U_{40}$, $U_{58}$);
- storing of the respective last but one signal value ($U_{46}$, $U_{53}$) as a maximum (MX), upon occurrence of a transition from the first characteristic value ($+ \Delta U$) to the second characteristic value ($- \Delta U$), and as a minimum (MN), respectively, upon occurrence of a transition from the second characteristic value ($- \Delta U$) to the first characteristic value ($+ \Delta U$);
- generating an arithmetic mean value from successive maximum signal values ($U_{46}$) and minimum signal values ($U_{53}$);
- storing the arithmetic mean values as zero-voltage values ($U_N$);
- comparing said signal values ($U_{40}$ - $U_{58}$) with the respective zero-voltage value ($U_N$);
- generating a third characteristic value ($+U$) during presence of signal values ($U_{42}$ - $U_{49}$, $U_{58}$) which are above the zero-voltage value ($U_N$), and a fourth characteristic value ($-U$), respectively, during presence of signal values ($U_{40}$ - $U_{41}$, $U_{50}$ - $U_{57}$) being below the zero-voltage value ($U_N$);
- storing the respective last signal value ($U_{42}$, $U_{50}$, $U_{58}$) as a zero transition (ND), upon occurrence of a transition between the third characteristic value ($+U$) and the fourth characteristic value ($-U$); and
- counting the number of zero transitions (ND).

2. The method of claim 1, characterized in that an average zero-voltage value is derived from a plurality of successive zero-voltage values ($U_N$) and the signal values ($U_{40}$ - $U_{58}$) are compared with the average zero-voltage value.

3. The method of claim 1, characterized in that a zero transition (ND) is detected when the zero-voltage value recorded during a transition between the third characteristic value ($+U$) and the fourth characteristic value ($-U$) is exceeded in either direction by a predetermined minimum value ($U_H$).

4. The method of claim 1, characterized in that both signals (A, B) are scanned at the same scanning rate ($\Delta t$), a direction of counting the number of zero transitions ($ND_A$) of one of the signals (A) being set as a function of the first ($+ \Delta U$) or the second ($- \Delta U$) characteristic value (UP, DOWN), respectively, of that value ($U_{42}$, $U_{50}$, $U_{58}$) of the one signal (A) corresponding to the zero transition ($ND_A$), and being, further, set as a function of the third ($+U$) or the fourth ($-U$) characteristic value, respectively, of the signal value ($U_B$) being recorded by the sensor (18) of the other signal (B) simultaneously with the zero transition ($ND_A$) of the one signal (A).

5. The method of any of claims 1 - 3, characterized in that both signals (A, B) are scanned at the same scanning rate ($\Delta t$), a direction of counting the number of zero transitions ($ND_A$) of one of the signals (A) being set as a function of the first ($+ \Delta U$) or the second ($- \Delta U$) characteristic value (UP, DOWN), respectively, of the value ($U_{42}$, $U_{50}$, $U_{58}$) of the one signal (A) corresponding to the zero transition ($ND_A$) and being, further, set as a function of the first ($+ \Delta U$) or the second ($- \Delta U$) characteristic value (UP, DOWN), respectively, of the zero transition ($ND_B$) of the other signal ($U_B$) preceding the zero transition ($ND_A$).

6. The method of any of claims 1 - 5, characterized in that the signals (A, B) are scanned offset in time by a sampling time ($T_S$) of the computing means, and that, when zero transitions ($ND_A$, $ND_B$) are detected in both signals (A, B) in two scanning operations, being offset only by the sampling time ($T_S$), such joint zero transition ($ND_A$, $ND_B$) is counted twice.

7. The method of claim 6, characterized in that the counting direction is locked when zero transitions ($ND_A$, $ND_B$) are detected in both signals (A, B) in two scanning operations, separated only by the sampling time ($T_S$).

8. The method of claim 7, characterized in that the locking is terminated upon subsequent detection of further joint zero transitions ($ND_A$, $ND_B$) in both signals (A, B) in two scanning operations, separated only by the switching time ($T_S$).

9. An electronic slide caliper having a rule (10) and a slide (11) arranged on the rule (10) for displacement thereon in a longitudinal direction, a marking (14) being provided on the rule (10) comprising longitudinal marks (15) disposed periodically in the longitudinal direction at a grid pitch ($2\pi$), the caliper (1) comprising, further, at least two sensors (17, 18) arranged on the slide (11) and responding to the marking (14), the sensors (17, 18) being offset relative to each other by a predetermined amount (n$\pi$ $\pm$ $\pi$/2) being unequal to n times half the grid pitch ($\pi$) with n being an integer number so that when the slide (11) is displaced along the rule (10), periodic voltage signals (A, B) generated by the sensors (17, 18) are offset in phase ($\Delta\phi$) relative to each other, the caliper (1) comprising, further, computing means for adding and subtracting, respectively, pulses derived from the signals (A, B) as a function of a sign of the phase offset ($\Delta\phi$), characterized in that the computing means comprises:

- first means for scanning periodically at least one of the signals (A, B) at a predetermined scanning rate ($\Delta t$);
- second means for storing the scanned signal values ($U_A$, $U_B$);
- third means for comparing successive signal values ($U_{40}$, $U_{58}$);
- fourth means for generating a first characteristic value ($+ \Delta U$) upon occurrence of a rise and a second characteristic value ($- \Delta U$), respectively, upon occurrence of a decrease between the successive signal values ($U_{40}$, $U_{58}$);
- fifth means for storing the respective last but one of the signal values ($U_{46}$, $U_{53}$) as a maximum (MX) upon occurrence of transition from the first characteristic value ($+ \Delta U$) to the second characteristic value ($- \Delta U$), or as a minimum (MN) upon occurrence of a transition from the second characteristic value ($- \Delta U$) to the first characteristic value ($+ \Delta U$);
- sixth means for deriving an arithmetic mean value from successive maximum signal values ($U_{46}$) and minimum signal values ($U_{53}$);
- seventh means for storing the mean values as zero-voltage values ($U_N$);
- eighth means for comparing the signal values ($U_{40}$ -$U_{58}$) with the respective zero-voltage value ($U_N$);
- ninth means for generating a third characteristic value ($+U$) during presence of the signal values ($U_{42}$ -$U_{49}$, $U_{58}$) being above the zero-voltage value ($U_N$), and a fourth characteristic value ($-U$), respectively, during presence of signal values ($U_{40}$ - $U_{41}$, $U_{50}$ - $U_{57}$) being below the zero-voltage value ($U_N$);
- tenth means for storing the respective last signal value ($U_{42}$, $U_{50}$, $U_{58}$) as zero transition (ND) upon occurrence of transition between the third characteristic value ($+U$) and the fourth characteristic value ($-U$); and
- eleventh means for counting the number of zero transitions (ND).

**Revendications**

1. Procédé de mesure d'une longueur au moyen d'un pied à coulisse électronique (1) composé d'une règle (10) et d'un curseur (11) disposé sur la règle (10) et pouvant coulisser dans le sens longitudinal, d'une graduation (14) portée par la règle (10) et constituée de repères alignés (15) disposés à intervalle régulier dans le sens de la longueur selon un pas élémentaire (2 $\pi$), d'au moins deux capteurs (17, 18) disposés sur le curseur (11), qui réagissent à la graduation (14) et sont décalés l'un par rapport à l'autre dans le sens longitudinal d'une valeur (n $\pi$ $\pm$ $\pi$/2) différente de n fois la moitié du pas ($\pi$), n étant un nombre entier, de telle sorte que lorsque le curseur (11) se déplace sur la règle (10) les signaux périodiques (A, B) émis par les capteurs (17, 18) présentent entre eux un déphasage ($\Delta\phi$), et de moyens de commutation pour additionner ou pour soustraire des impulsions dérivées des signaux (A, B) en fonction du signe du déphasage ($\Delta\phi$), <u>caractérisé</u> en ce qu'il comprend les étapes opératoires suivantes :

- Echantillonnage périodique de l'un des signaux (A, B) au moins, à une fréquence d'échantillonnage définie au préalable ($\Delta t$) ;
- Mémorisation des valeurs de signal échantillonnées ($U_A$, $U_B$) ;
- Comparaison entre elles des valeurs successives de signal ($U_{40}$-$U_{58}$) ;
- Obtention d'une première valeur caractéristique ($+\Delta U$) en cas d'accroissement du signal ou bien d'une seconde valeur caractéristique ($-\Delta U$) en cas de diminution du signal des valeurs successives de signal ($U_{40}$-$U_{58}$) ;
- Mémorisation, à chaque fois, de l'avant-dernière valeur de signal ($U_{46}$, $U_{53}$) en tant que maximum (MX) en cas de passage de la première valeur caractéristique ($+\Delta U$) à la seconde valeur caractéristique ($-\Delta U$), ou bien en tant que minimum (MN) en cas de passage de la seconde ($-\Delta U$) à la première valeur caractéristique ($+\Delta U$) ;
- Formation de la moyenne arithmétique des valeurs successives de signal maximal ($U_{46}$) et de signal minimal ($U_{53}$) ;

- Mémorisation des valeurs moyennes en tant que valeurs de tension nulle ($U_N$) ;
- Comparaison de chaque valeur de signal ($U_{40}$-$U_{58}$) avec la valeur de tension nulle ($U_N$) correspondante ;
- Obtention d'une troisième valeur caractéristique (+U) en cas de valeurs de signal ($U_{42}$-$U_{49}$, $U_{58}$) supérieures à la valeur de tension nulle ($U_N$) ou bien d'une quatrième valeur caractéristique (-U) en cas de valeurs de signal ($U_{40}$-$U_{41}$, $U_{50}$-$U_{57}$) inférieures à la valeur de tension nulle ($U_N$) ;
- Mémorisation, à chaque fois, de la dernière valeur de signal ($U_{42}$, $U_{50}$, $U_{58}$) en tant que passage par zéro (ND), en cas de passage entre la troisième valeur caractéristique (+U) et la quatrième valeur caractéristique (-U) ; et
- Comptage du nombre de passages par zéro (ND).

2. Procédé selon la revendication 1 ou 2, caractérisé en ce qu'un ensemble de valeurs de tension nulle ($U_N$) successives est obtenu et en ce que les valeurs de signal ($U_{40}$-$U_{58}$) sont comparées à la valeur de tension nulle obtenue.

3. Procédé selon la revendication 1 ou 2, caractérisé en ce qu'un passage à zéro (ND) est reconnu lorsque, lors du passage entre la troisième valeur caractéristique (+U) et la quatrième valeur caractéristique (-U), la valeur de tension nulle ($U_N$) est dépassée, en plus ou en moins, d'une valeur minimale ($U_H$) définie au préalable.

4. Procédé selon l'une ou plusieurs des revendications 1 à 3, caractérisé en ce que les deux signaux (A, B) sont échantillonnés à la même fréquence d'échantillonnage ($\Delta t$), et que le sens du comptage du nombre de passages à zéro ($ND_A$) de l'un des signaux (A) est fixé en fonction de la première (+$\Delta U$) ou bien de la seconde (-$\Delta U$) valeur caractéristique (UP, DOWN) (en montant, en descendant) de la valeur de signal ($U_{42}$, $U_{50}$, $U_{58}$) correspondant au passage par zéro ($ND_A$) dudit signal (A) et également en fonction de la troisième (+U) ou bien de la quatrième (-U) valeur caractéristique de la valeur de signal ($U_B$) détectée, au moment du passage à zéro ($ND_A$) dudit signal (A) par le capteur (18) de l'autre signal (B).

5. Procédé selon l'une ou plusieurs des revendications 1 à 3, caractérisé en ce que les deux signaux (A, B) sont échantillonnés à la même fréquence d'échantillonnage ($\Delta t$) et que le sens du comptage du nombre de passages à zéro ($ND_A$) de l'un des signaux (A) est fixé en fonction de la première (+$\Delta U$) ou bien de la seconde (-$\Delta U$) valeur caractéristique (UP, DOWN) (en montant, en descendant) de la valeur de signal ($U_{42}$, $U_{50}$, $U_{58}$) correspondant au passage par zéro ($ND_A$) dudit signal (A) et également en fonction de la première (+$\Delta U$) ou bien de la seconde (-$\Delta U$) valeur caractéristique (UP, DOWN) du passage par zéro ($ND_B$) de l'autre signal ($U_B$) précédant le passage par zéro ($ND_A$).

6. Procédé selon l'une ou plusieurs des revendications 1 à 5, caractérisé en ce que les signaux (A, B) sont échantillonnés avec un décalage dans le temps correspondant au temps de commutation ($T_S$) du dispositif de commutation et en ce que, en cas de détection de passage à zéro ($ND_A$, $ND_B$) des deux signaux (A, B) lors de deux échantillonnages décalés seulement du temps de commutation ($T_S$), le passage par zéro commun ($ND_A$, $ND_B$) est compté deux fois.

7. Procédé selon la revendication 6, caractérisé en ce qu'à partir d'une reconnaissance des passages par zéro ($ND_A$, $ND_B$) des deux signaux (A, B) lors de deux échantillonnages décalés seulement du temps de commutation (TS), le sens du comptage (L, R) est bloqué.

8. Procédé selon la revendication 7, caractérisé en ce que le blocage est supprimé en cas de réitération immédiate de la reconnaissance des passages par zéro ($ND_A$, $ND_B$) des deux signaux (A, B) lors de deux échantillonnages décalés seulement du temps de commutation ($T_S$).

9. Pied à coulisse électronique composé d'une règle (10) et d'un curseur (11) disposé sur la règle (10) et pouvant coulisser dans le sens longitudinal, d'une graduation (14) portée par la règle (10) et constituée de repères alignés (15) disposés à intervalle régulier dans le sens de la longueur selon un pas élémentaire ($2\pi$), d'au moins deux capteurs (17, 18) disposés sur le curseur (11), qui réagissent à la graduation (14) et sont décalés l'un par rapport à l'autre dans le sens longitudinal d'une valeur ($n\pi \pm \pi/2$), différente de n fois la moitié du pas ($\pi$), n étant un nombre entier, de telle sorte que, lorsque le curseur (11) se déplace sur la règle (10), les signaux périodiques (A, B) émis par les capteurs (17, 18) présentent entre eux un déphasage ($\Delta\phi$), et de moyens de commutation pour additionner ou soustraire des impulsions dérivées des signaux (A, B) en fonction du signe du déphasage ($\Delta\phi$), caractérisé en ce que les moyens de commutation comprennent en outre :

- Un premier dispositif pour l'échantillonnage périodique de l'un des signaux (A, B) au moins, à une fréquence d'échantillonnage définie au préalable ($\Delta t$) ;
- Un second dispositif pour la mémorisation des valeurs de signal échantillonnées ($U_A$, $U_B$) ;
- Un troisième dispositif pour la comparaison entre elles des valeurs successives de signal ($U_{40}$-$U_{58}$) ;
- Un quatrième dispositif pour l'obtention d'une première valeur caractéristique ($+\Delta U$) en cas d'accroissement du signal ou bien d'une seconde valeur caractéristique (-$\Delta U$) en cas de diminution du signal des valeurs successives de signal ($U_{40}$-$U_{58}$) ;
- Un cinquième dispositif pour la mémorisation, à chaque fois, de l'avant-dernière valeur de signal ($U_{46}$, $U_{53}$) en tant que maximum (MX) en cas de passage de la première valeur caractéristique ($+\Delta U$) à la seconde valeur caractéristique (-$\Delta U$), ou bien en tant que minimum (MN) en cas de passage de la seconde valeur caractéristique (-$\Delta U$) à la première valeur caractéristique ($+\Delta U$) ;
- Un sixième dispositif pour la formation de la moyenne arithmétique des valeurs successives de signal maximal ($U_{46}$) et de signal minimal ($U_{53}$) ;
- Un septième dispositif pour la mémorisation des valeurs moyennes en tant que valeurs de tension nulle ($U_N$) ;
- Un huitième dispositif pour la comparaison de chaque valeur de signal ($U_{40}$-$U_{58}$) avec la valeur de tension nulle ($U_N$) correspondante ;
- Un neuvième dispositif pour l'obtention d'une troisième valeur caractéristique ($+U$) en cas de valeurs de signal ($U_{42}$-$U_{49}$, $U_{58}$) supérieures à la valeur de tension nulle ($U_N$) ou bien d'une quatrième valeur caractéristique (-U) en cas de valeurs de signal ($U_{40}$-$U_{41}$, $U_{50}$-$U_{57}$) inférieures à la valeur de tension nulle ($U_N$) ;
- Un dixième dispositif pour la mémorisation, à chaque fois, de la dernière valeur de signal ($U_{42}$, $U_{50}$, $U_{58}$) en tant que passage par zéro (ND), en cas de passage entre la troisième valeur caractéristique ($+U$) et la quatrième valeur caractéristique (-U) ; et

- Un onzième dispositif pour le comptage du nombre de passages par zéro (ND).

15

# Fig.1

Fig. 2

Fig.3

Fig.4

Fig.5

Fig.6

Fig.7

$$U_{ND} = \frac{U_{MX} + U_{MN}}{2}$$

$$\overline{U_{ND}} = \frac{1}{8} \sum_{i=n-7}^{n} U_{ND_i}$$

Fig.8

EP 0 461 300 B1

Fig.9

Fig.10

21

Fig.11

Fig.12

nein —— NDA ? —— ja

nein —— NDB ? —— ja

nein —— NDB? —— ja ——————→ FLAG

DOWN —— Vz NDB? —— UP

DOWN —— Vz NDA ? —— UP

L —— Last Count? —— R

71
DOWN —— Vz NDA ? —— UP

72
Vz NDA ?

73
DOWN —— Vz NDB? —— UP

74
Vz NDB?

1R    1L

1L    1R

1L    1R

1R    1L

2L    2R

EP 0 461 300 B1